Europäisches Patentamt

European Patent Office

Office européen des brevets

(19)

(11) Veröffentlichungsnummer : **0 198 841**
**B1**

(12) **EUROPÄISCHE PATENTSCHRIFT**

(45) Veröffentlichungstag der Patentschrift :
24.01.90

(21) Anmeldenummer : 85904451.3

(22) Anmeldetag : 12.09.85

(86) Internationale Anmeldenummer :
PCT/EP 85/00460

(87) Internationale Veröffentlichungsnummer :
WO/8602190 (10.04.86 Gazette 86/08)

(51) Int. Cl.$^5$ : **G 11 B   5/588**

(54) SPURNACHGESTEUERTES MAGNETBANDGERAT MIT QUERSPURAUFZEICHNUNG.

(30) Priorität : 28.09.84 DE 3435649

(43) Veröffentlichungstag der Anmeldung :
29.10.86 Patentblatt 86/44

(45) Bekanntmachung des Hinweises auf die Patenterteilung : 24.01.90 Patentblatt 90/04

(84) Benannte Vertragsstaaten :
AT BE CH DE FR GB IT LI LU NL SE

(56) Entgegenhaltungen :
EP--A-- 0 040 066
DE--B-- 1 085 688
FR--A-- 2 344 924
US--A-- 2 979 558
US--A-- 3 942 084
US--A-- 4 004 205
US--A-- 4 180 833

(73) Patentinhaber : Deutsche Thomson-Brandt GmbH
Hermann-Schwer-Strasse 3 Postfach 1307
D-7730 Villingen-Schwenningen (DE)

(72) Erfinder : KAADEN, Jürgen
Im Tannhörnle 10
D-7730 VS-Pfaffenweiler (DE)
Erfinder : SCHANDL, Hartmut
Egerstrasse 2
D-7730 Villingen-Schwenningen (DE)

EP 0 198 841 B1

## Beschreibung

Die Erfindung betrifft ein Spurnachgesteuertes ein Magnetbandgerät mit Querspuraufzeichnung.

Bei Magnetbandgeräten des oben genannten Typs erfolgt eine Aufzeichnung und das Lesen der Spuren vorzugsweise mit Hilfe eines die Magnetköpfe trangenden Kopfrades, welches sich quer zur Bandlaufrichtung dreht. Es werden im Gegensatz zu handelsüblichen Videorecordern nach dem Schrägspurverfahren (helical scan) Magnetspuren aufgezeichnet, die näherungsweise senkrecht zu den Bandkanten des Magnetbandes verlaufen. Während nach bekannten Verfahren, z.B. VHS, in einer Schrägspur der Inhalt eines Halbbildes gespeichert werden kann, ist durch die geringe zur Verfügung stehende Breite des Magnetbandes bei Querspuraufzeichnung nur ein Bruchteil eines Halbbildes auf einer Spur unterzubringen. Es müssen also für die Speicherung eines Halbbildes mehrere Spuren zeitsequentiell nebeneinander aufgezeichnet werden. Dabei wird von jedem einzelnen Magnetkopf des Kopfrades eine Spur mit einer aus den jeweiligen mechanischen Gegebenheiten des Gerätes abzuleitenden Anzahl von Zeilen übernommen. Im Wiedergabebetrieb werden die Teilbilder nacheinander ausgelesen und in einem angeschlossenen Fernsehgerät zu einem Halbblild zusammengesetzt. Durch Abweichungen unterschiedlicher Art, so z.B. durch Schwankungen im Bandvorschub können bei der Wiedergabe Phasenfehler auftreten. Diese bewirken im Fernsehempfänger Synchronisations-störungen, die sich auf dem Bildschirm als unangenehme Verzerrung von in einem Bild vorhandener senkrecht verlaufender Kanten bemerkbar machen. Zur Beseitigung derartiger Phasenfehler sind verschiedene Schaltungen bei bekannten Querspurgeräten, hauptsächlich professioneller Art, bekannt. So durchläuft z.B. bei Querspurgeräten der Firma Ampex das wiederzugebene FBAS-Signal eine. spannungsgestuerte Verzögerungsleitung, oder in einer anderen Version umschaltbare Verzögerungsleitungen, die durch Auswertung von zusätzlich aufgezeichneten Referenzimpulsen oder auch von dem als Referenz dienenden Farbhilfsträger gesteuert werden. Dadurch werden zwar Phasenfehler bei der Wiedergabe vermieden, eine exakte Spurnachsteuerung für optimale Ausnutzung der aufgesprochenen Signale, sowie optimales übersprechverhalten wird nicht erreicht.

Eine weitere Möglichkeit, Phasenfehler zu beseitigen ist in der DE-PS 1085688 beschrieben, nach der eine Kopftrommel mit mehreren Köpfen, mit einer zu ihr parallel stehenden Hilfstrommel mit nur einem Aufnahmekopf ausgerüstet ist, wobei sich beide Trommeln auf derselben Welle drehen. Die Hilfstrommel ist von der Haupttrommel auf einen solchen axialen Abstand verschoben; daß sie zwischen zwei aufgezeichneten Querspuren liegt. Bei der Wiedergabe gibt der Hilfskopf, wenn er sich einer aufgezeichneten Querspur nähert, einen Impuls ab, der eine Beschleunigung des Bandtransportes hervorruft.

Es ist auch bekannt, für eine Spurnachsteuerung den oder die Magnetköpfe in ihrer Höhenlage relativ zum Magnetband in Abhängigkeit von Steuersignalen zu verstellen, welche bei der Aufnahme auf das Magnetband aufgesprochen werden, wie in « Grundig, Technische Informationen » 3-1980, Nr. 3, Seiten 111-130 beschrieben. Die Höhenverstellung geschieht mittels einseitig an der Kopftrommel eingespannter Piezo-Keramik-Plättchen, auf deren freischwingender Zunge die Videoköpfe befestigt sind. Durch Anlegen einer Steuerspannung werden die Piezo-Keramik-Plättchen mechanisch so ausgelenkt, daß die Magnetköpfe den aufgesprochenen Schrägspuren folgen können.

Ferner ist aus der EP-A-40 066 ein spurnachgesteuertes Magnetbandgerät bekannt, bei dem ein Kopfpaar gleichzeitig über 2 Spuren geführt wird. Aus der Phasenlage der abgetasteten Signale werden Steuergrößen abgeleitet, die zur Nachstellung der Köpfe in Achsrichtung des Kopfrades oder zur Veränderung der Bandgeschwindigkeit dienen.

Der Erfindung liegt die Aufgabe zugrunde, eine Spurnachsteuerung für ein Magnetbandgerät mit Queraufzeichnung aufzuzeigen, bei welcher die Richtung der Phasenfehler für die einzelnen Magnetköpfe bei Wiedergabe anhand von Horizontal-Synchron-Impulsen oder auch anderer kontinuierlich aufgezeichneter Impulse erkannt wird und daraus eine Nachsteuerung der Lage des Kopfrades zur aufgesprochenen Magnetspur erfolgt. Es soll erreicht werden, daß sowohl ein optimale Spurnachsteuerung mit minimalem Übersprechen als auch eine optimale Phasenkorrektur erfolgt.

Diese Aufgabe wird durch die im Anspruch 1 beschriebene Erfindung gelöst. Vorteilhafte Weiterbildungen der Erfindung sind in den Unteransprüchen beschrieben.

Im Prinzip wird die Richtungsauswertung der Phasenfehler durch die Azimutwinkel der auf dem Kopfrad angeordneten Magnetköpfe ermöglicht. Wird nämlich eine mit einem vorgegebenen Azimutwinkel aufgezeichnete Spur von einem Magnetkopf mit gleichem Azimutwinkel exakt mittig abgetastet, werden bei sich in den einzelnen Zeilen wiederholenden Impulsfolgen, wie z.B. Horizontalimpulsen keine Phasenabweichungen gegenüber einer Referenzimpulsfolge erkannt. Liegt dagegen die Spur nicht mittig zum Abtastkopf ergeben sich Zeitverscheibungen, also Phasenfehler im Vergleich mit einer Referenzimpulsfolge. Diese Phasenfehler haben bei gleichem Versatz der Spur zum abtastenden Magnetkopf unterschiedliche Vorzeichen. Die Polarität ergibt sich aus den spiegelbildlich sich abwechselnden Azimutwinkeln der Magnetköpfe. In einem Fall wird von einem Magnetkopf bei Versatz in Richtung zür vorher geschriebenen Spur der Horizontal-Impuls zeitlich später und bei Versatz zur nächstfolgenden geschriebenen Spur zeitlich früher abgetastet, während bei der nächstfolgenden Magnetspur bei gleichem Versatz der Magnetkopf mit spiegelbildlich anderem Azimutwinkel die Polarität der Phasenabweichungen genau umgekehrt liest. Es ist also zu erkennen, daß je größer der Azimutwinkel der Magnetköpfe ist, um so größer sind auch die Phasensprünge, d.h. die zeitlichen Abweichungen bei Abtastung neben der Spurmitte. Es ist aber auch möglich, wenn z.B. die einzelnen Magnetköpfe nicht ganz genau justiert sind, absichtlich neben der Spurmitte auszulesen, um dadurch Phasenfehler zu vermeiden.

In einer Erkennungsschaltung werden für jede Kopfumdrehung Größe und Richtung der Phasenabweichungen für die einzelnen Magnetköpfe detektiert und einem Speicher zugeführt. Bei der nächsten Kopfumdrehung werden die vorher gespeicherten Werte ausgelesen und einem elektromechanischen Wandler in Form von Steuerspannungen zur Nachstellung des Kopfrades individuell für jeden Magnetkopf zugeführt. Dabei geschieht die Nachstellung in Form einer näherungsweisen Anpassung an die jeweils geschriebene Spur, indem die Korrekturgrößen in Schritten unterteilt, bei jeder Kopfumdrehung neu ausgegeben werden. Erst wenn die Phasenfehler so gering sind, daß sie innerhalb eines vorgegebenen Fensters nicht mehr erkannt werden, entfällt eine weitere Nachstellung des Kopfes, er wird mit dem seiner Abweichung entsprechenden gespeicherten Endwert nachgesteuert.

Ein weiteres Problem bei Geräten mit Querspuraufzeichnung, bei denen der Inhalt eines Halbbildes auf mehrere nebeneinander liegende Magnetspuren aufgezeichnet ist, stellt die Wiedergabe von Standbildern dar. Auch dieses Problem kann durch die erfindungsgemäße Nachsteuerung des Kopfrades erreicht werden, indem bei stehendem Magnetband das Kopfrad zusätzlich zum Phasenfehlerausgleich durch einen Rampengenerator über die ein Halbbild oder Vollbild enthaltenden Magnetspuren in sich wiederholender Folge verschoben wird.

Bei einer bevorzugten Ausführung der Erfindung werden Spuren mit einem Inhalt von 25 Fernsehzeilen je Spur bei einer Breite des Magnetbandes von 8 mm aufgezeichnet. Dabei beträgt die Abtastgeschwindigkeit etwa 4 m pro sek. Die Zahl der Magnetköpfe beträgt je nach Wahl des Umschlingungswinkels bei $2 n = 6$ (60-80°) oder $2 N = 8$ einen durch die Wölbung erzielten Umschlingungswinkel von 45-60°.

Die Erfindung wird im folgenden anhand eines Ausführungsbeispiels in den Zeichnungen näher erläutert.

Es zeigen:

Figur 1 eine Abbildung der auf dem Bildschirm eines Fernsehgerätes erscheinenden Verzerrungen von Vertikallinien bei unvollkommener Spurnachsteuerung.

Figur 2 ein Blockschaltbild einer möglichen Ausführungsform für eine Spurnachsteuerschaltung.

Figuren 3 und 4 Ablaufdiagramme dieser Einrichtung im normalen Wiedergabebetrieb oder im Standbild oder Suchlaufbetrieb.

Figur 5 Zeit- und Signalformdiagramme an Aus- und Eingängen verschiedener Baustufen der in der Fig. 2 gezeigten Schaltung.

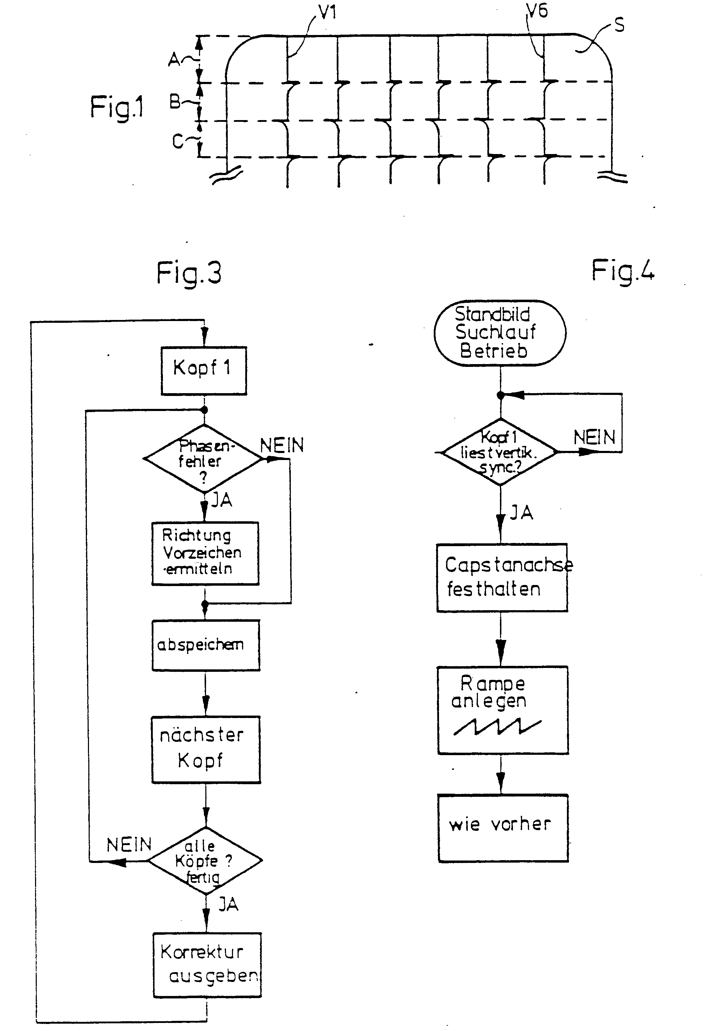

Figur 1 zeigt den sichtbaren Effekt von Phasenfehlern bei Spurübergängen von einer Magnetspur auf die nächste Spur infolge unvollkommener Spurnachsteuerung. Im Abstand von 25 Zeilen, die von jedem Magnetkopf abgetastet werden, sind Synchronisationsfehler auf dem Bildschirm S zu erkennen. Es sind 6 Vertikallinien V1 — V6 dargestellt, die in entgegengesetzter Richtung verzerrt sind. Die Richtung der Phasenfehler und damit auch der Verzerrungen ergibt sich aus dem Azimutwinkel der einzelnen Magnetköpfe, die spiegelbildlich gegeneinander versezt angeordnet sind.

Im Bereich A ist das wiedergegebene Signal von Kopf 1 zu erkennen, im Bereich B das von Kopf 2 und im Bereich das von Kopf 3. Die Darstellung soll veranschaulichen, daß eine Bildwiedergabe bei Querspurgeräten ohne Spurnachsteuerung einem Betrachter nicht zugemutet werden kann.

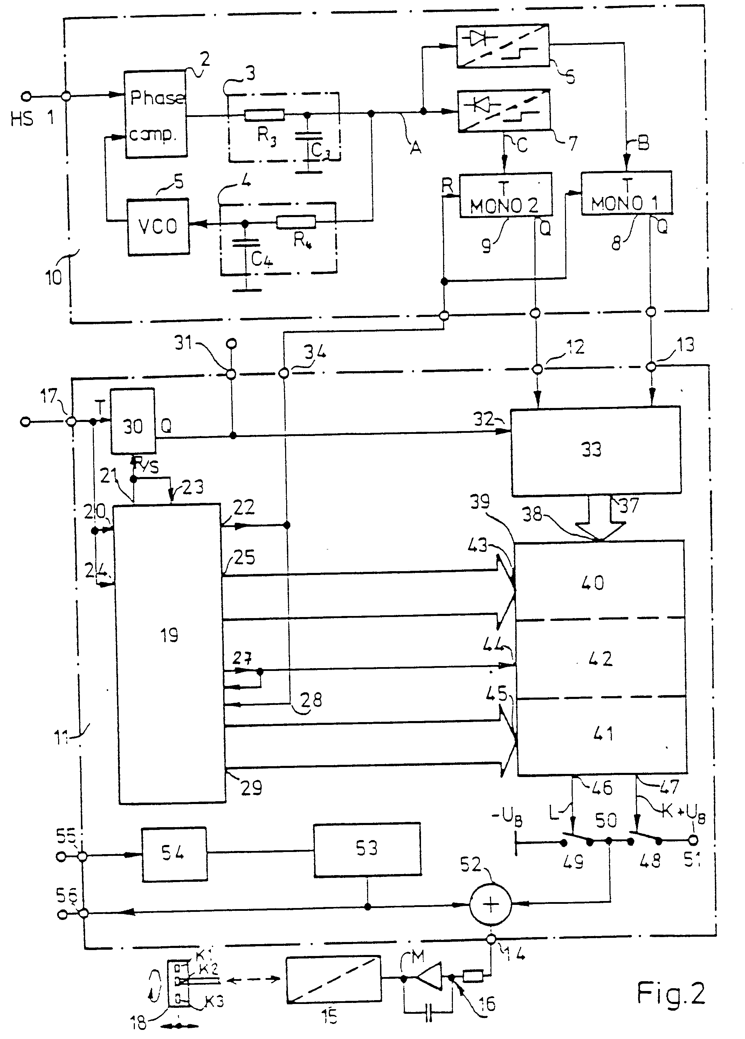

Figur 2 zeigt ein beispielhaftes Blockschaltbild einer Spurnachsteuerung für ein Querspurmagnetbandgerät. Die Spurnachsteuerung soll, wie in der Deutschen Patentanmeldung DE-A 3421183 beschrieben, dadurch erfolgen, daß das rotierende Kopfrad 18 im Wiedergabebetrieb in Richtung seiner Drehachse verschiebbar ist. Diese Verschiebung wird durch einen elektro-mechanischen Wandler 15 bewirkt, der von einer elektronischen Schaltung angesteuert wird, die aus folgenden Hauptgruppen besteht:

Einer Erkennungsschaltung 10 in welcher Größe und Phasenlage zeitlich sich in einer Zeile wiederholender Impulse, wie z. B. horizontal Synchronimpulse mit einer Referenz-Impulsquelle verglichen werden. Die in dieser Schaltung erhaltenen Informationen werden den Eingängen 12 und 13 der folgenden Korrekturschaltung 11 zugeführt, in welcher die erkannten Phasenfehler den einzelnen Magnetköpfen in der Fehlerrichtungserkennungsstufe 33 zugeordnet werden. Außerdem ist in der Korrekturschaltung 11 eine Speicheranordnung 39 mit einem Eingangsspeicher 40, einer Transferstufe 42 und einem Ausgangsspeicher 41 enthalten. Durch Zwischenspeicherung der für die Nachstellung des Kopfrades erforderlichen Steuerdaten kann eine exakte zeitliche Anpassung zwischen Ausgabe von Steuerspannungen und der jeweiligen Stellung des rotierenden Kopfrades 18 erreicht werden. Diese Steuerspannungen werden am Ausgang 14 der Korrekturschaltung 11 über ein Integrierglied 16 dem elektro-mechanischen Wandler 15 für die Nachsteuerung des Kopfrades 18 zugeführt. Die Funktion der einzelnen im Blockschaltbild aufgeführten Schaltungsteile ist folgende:

Dem Eingang 1 der Erkennungsschaltung 10 werden bei der Wiedergabe die wiederhergestellten Horizontal-Synchron-Impulse HS zugeführt.

Von hier gelangen diese Impulse an einen ersten Eingang einer Phasenvergleichsstufe 2, deren Ausgang an ein erstes RC Tiefpass-Filter 3 mit verhältnismäßig kleiner Zeitkonstante T3 (R3 × C3) angeschlossen ist. Der Ausgang des ersten RC Tiefpass-Filters 3 ist einerseits mit dem Eingang eines zweiten RC Tiefpass-Filters 4 mit hoher Zeitkonstante T4 (R4 × C4) verbunden und andererseits mit zwei Polaritätstrennstufen 6 und 7. Die erste Stufe 6 läßt nur Impulse positiver Polarität durch während die zweite Stufe 7 nur negative Impulse durchläßt. Der Ausgang des zweiten Tiefpass-Filters 4 ist mit dem Frequenzsteuereingang eines spannungs-gesteuerten Oszillators 5 mit veränderlicher Frequenz (VCO) verbunden, dessen Ausgang mit dem zweiten Eingang der Phasenvergleichsstufe 2 verbunden ist. Die Phasenvergleichsstufe 2 mit den beiden kaskadierten Tiefpassfiltern 3 und 4 und dem spannungsgesteuerten Oszillator 5 formen zusammen eine bekannte Phasenregelschleife (PLL) welche eine Oszillatorwelle erzeugt, deren Frequenz dem Mittelwert der Frequenz der wiedergegebenen Horizontal-Synchronimpulse HS gleicht.

Infolgedessen gibt der Ausgang A des ersten Tiefpassfilters oder Zeitgliedes 3, das eine kleine Zeitkonstante T3 aufweist, impulsförmige Informationen über kurzzeitige Phasenänderungen ab, deren Vorseichen der Richtung des Phasenunterschiedes zwischen der Oszillatorwelle und dem jeweilig ankommenden Horizontal-Synchronimpulsen entspricht.

Diese Impulse werden parallel-geschalteten Eingängen von zwei Polaritätstrennstufen 6 und 7 zugeführt, deren Aufgabe darin besteht, die ankommenden Impulse je nach Vorzeichen aufzubereiten, d. h. die eine Trennstufe spricht nur auf positive Impulse und die andere nur auf negative Impulse an. Die Ausgänge der Polaritätstrennstufen 6 und 7 sind an die Triggereingängen zweier mono-stabiler-Kippschaltungen 8 und 9 angeschlossen, die als Impulsformerstufen arbeiten. Die Phasenabweichungen an ihren Triggereingängen setzen die Kippschaltungen 8 und 9 in ihren aktiven Zustand, so daß sie Rechteck-Impulse gleicher Polarität und vorbestimmter Dauer abgeben. Die Dauer der Impulse ist wesentlich kleiner als eine Spurdauer (1,6 ms). Die Ausgänge (Q) der mono-stabilen Kippschaltungen 8 und 9 sind mit den Eingängen 12 und 13 einer Fehlerrichtungserkennungsstufe 33 in der Phasenkorrekturschaltung 11 verbunden. Diese Phasenkorrekturschaltung 11 weist einen weiteren Eingang 17 auf, der von dem Ausgang eines mit der Drehwelle des Kopfrades 18 mechanisch verbundenen Impulsgeber verbunden ist. Dieser Impulsgeber kann z. B. durch elektro-magnetische oder opto-elektronische Mittel so ausgeführt werden, daß er jedesmal, wenn ein neuer Magnetkopf das Magnetband berührt, einen Impuls abgibt. Er liefert also an den Eingang 17 sechs Impulse pro Umdrehung des Kopfrades 18. Außerdem muß der Impuls der der Bandkontaktlage des ersten Kopfes K1 entspricht, so ausgeführt sein, daß z. B. durch eine größere Breite des Impulses dieser Kopf erkannt werden kann. Dadurch wird es möglich, daß auch die anderen Köpfe (K2 bis K6) identifiziert werden können, um eine richtige Zuordnung des Azimutwinkels dieser Köpfe zur Speicherung der Phasenfehler im Sinne einer korrekten Spurnachsteuerung zu erreichen. Jedes Speicherelement enthält somit vor dem Ende einer Kopfumdrehung das Vorzeichen des Phasenfehlers des ihm entsprechenden Kopfes. Während der nächsten Umdrehung des Kopfrades 18 werden die gespeicherten Daten als Korrektursignal ausgegeben und an den Wandler 15 geleitet. Dieses geschieht vorzugsweise etwa eine halbe Spurdauer (800 μs) vor dem Bandkontakt des Kopfes dessen Axiallage zu korrigieren ist.

Das Kopfrad 18 wir dann bei jeder Umdrehung solange axial verschoben, bis die Amplitude der Phasenfehler so klein ist, daß der Ansprech-oder Auslöseschwellwert der mono-stabilen-Kippschaltungen 8 und 9 unterschritten wird.

Um die Phasenfehler den einzelnen Köpfen des Kopfrades zuordnen zu können, besitzt die Korrekturschaltung 11 einen Detektorzähler 19, dessen erster Eingang 20 mit dem Impulsgeber-Eingang 17 verbunden ist. Dieser Detektorzähler 19 hat eine Decodierstufe, die z. B. den nach Breite codierten Impuls des ersten Kopfes K1 decodiert und an einem ersten Ausgang 21 einen dementsprechenden Impuls liefert. Außerdem liefert der Detektorzähler an einem zweiten Ausgang 22 Impulse, die um eine halbe Spurdauer (800 μs) im Vergleich zu den vom Impulsgeber gelieferten Impulsen verzögert sind. Der Detektorzähler 19 hat außerdem eine erste Ringzählerstufe, die einen Rücksetzeingang 23 und einen Zähl- oder clock-Einingang 24 aufweist. Der Rücksetzeingang 23 ist mit dem Decodierausgang 21 verbunden und der clock-Eingang 24 mit dem Eingang 20. Die erste Ringzählerstufe hat weitere 6 erste Parallel-Ausgänge 25 von denen einer nach dem anderen für eine ganze Spurdauer (1.600 μs) auf « high » geschaltet wird. Außerdem hat der Detektorzähler 19 eidne zweite Ringzählerstufe deren Rücksetzeingang 26 mit dem zweiten Decodierausgang 27, der Rücksetzimpulse eine halbe Spurdauer vor den breite-decodierten Impulsen liefert, verbunden ist. Der Ringzählereingang 28 der zweiten Ringzählerstufe wird von dem zweiten Ausgang 22 gespeist und hat sechs zweite Parallel-Ausgänge 29 die nacheinander eine halbe Spurdauer früher auf « high » geschaltet werden, als die ersten Parallel-Ausgänge 25. Außerdem speist der mit dem Impulsgeber verbundene erste Eingang 17 den Steuer- oder Toggl-Eingang T eines Bi-stabilen Kippschalters 30, dessen Setzeingang S mit dem ersten Decodierausgang 21 oder aber dessen Rücksetzeingang R mit dem zweiten Decodierausgang 27 verbunden ist, so daß er bei jeder Umdrehung auf die richtige Phasenlage synchronisiert werden kann. Der Ausgang Q des Kippschalters 30 ist einerseits mit einem Kopfumschaltsteuerausgang 31 und andererseits mit einem Eingang 32 einer Fehlerrichtungserkennungsstufe 33 verbunden. Das Ausgangssignal an diesem Ausgang Q ist ein Rechtecksignal (Kopfschaltsignal), dessen Periode die doppelte Zeit einer Spurdauer (1.600 μs) beträgt.

Ein hoher Pegel H des Ausgangs Q gibt den Band-Kopfkontakt eines ungradzahligen Kopfes (K1, K3, K5) mit positivem Azimutversatz an, ein niedriger Pegel L steht für den Kopfkontakt eines geradzahligen Kopfes (K2, K4, K6) mit einem negativen Azimutversatz (oder umgekehrt).

Der zweite Ausgang 22 des Detektorzählers 19, der um eidne halbe Spurdauer verspätete Impulse liefert, ist durch den Ausgang 34 mit den Rücksetzeingängen R der mono-stabilen Kippschaltungen 8 und 9 verbunden, so daß die Ausgänge Q Impulse von einer halben Spurdauer (800 μs) liefern. Diese Ausgänge Q sind mit den Eingängen 12 und 13 der Schaltung 11 bzw. mit den Eingängen der Fehlerrichtungserkennungsstufe 33 verbunden.

Die Fehlerrichtungserkennungsschaltung 33 erhält daher einerseits Impulse, die der Polarität der von der PLL-Schleife gemessenen Phasensprüngen entsprechen und andererseits am Eingang 32 das Rechtecksignal, daß dem Azimutwinkel des gerade im Bandkontakt befindlichen Kopfes entspricht. Durch Korrelation dieser Daten ist somit die Spurfehlerrichtung bestimmbar. Dies bedeutet, daß die Schaltung 33 an ihrem Ausgang 37 drei verschiedene Signale liefern kann. Das erste Signal entspricht einem Spurnachlauf (negativer Fehler), das zweite einer Spurgleichheit (null Fehler) und das dritte einem Spurvorlauf (positiver Fehler). Dies kann entweder mit Hilfe von digitalen Wörtern mit zwei Binärziffern (Bits) oder einer tri-state-Technik ausgedrückt werden. Die Ausführung kann z. B. mit zwei Invertern, 4 UND-Gattern und 2 OR-Gattern geschehen, die ähnlich kombiniert werden können, wie integrierte doppelte AND-OR-INVERT-Gatter vom Typ TTL 7451.

Die Ausgänge 37 der Spurfehlerrichtungserkennungsschaltung 33 sind mit den Dateneingängen 38 einer doppelten Speicheranlage 39 verbunden. Diese besteht aus einem Eingangsspeicher 40, einem Ausgangsspeicher 41 und einer steuerbaren Datentransferstufe 42. Die Adresseneingänge 43 des Eingangsspeichers 40 sind mit den ersten Parallelausgängen 25 des Detektorzählers 19 verbunden, so daß die Fehlerrichtungsdaten nacheinander in die der Kopfzahl entsprechenden (hier 6) Speicherzellen (2 Bit) des Eingangsspeichers 40 eingeschrieben werden. Die Datentransferstufe 42 verbindet während einer kurzen Zeitspanne die Datenausgänge dieser Speicherzellen mit den Dateneingängen der entsprechenden Zahl von Speicherstellen des Ausgangsspeichers 41. Somit werden die Daten des Eingangsspeichers 40 seriell in den Ausgangsspeicher 41 übertragen. Diese Übernahme geschieht mit Hilfe des Rücksetzimpulses der zweiten Ringzählerstufe am Ausgang 27 des Detektorzählers 19, also des auftretenden invertierten Signals des Ausgangs 22. Der Ausgang 27 ist für diesen Zweck mit dem Eingang 44 der Speicheranordnung 39 verbunden.

Die Adresseneingänge 45 des Ausgangsspeichers 41 sind mit den 6 parallelen Ausgängen 29 des Detektorzählers 19 verbunden, so daß die Dateninhalte aller seiner 6 Speicherzellen nacheinander auf seinen 2 Datenausgängen 46 und 47 erscheinen. Diese Dateninhalte werden in bezug auf den Erkennungsvorgang um 5 1/2-Spurdauern verzögert ausgegeben, so daß der Korrekturvorgang 1/2-Spurdauer vor dem nächsten Erkennungsvorgang desselben Kopfes erfolgt. Das Ergebnis dieses nächsten Erkennungsvorganges kann so das Korrekturergebnis des vorhergehenden Erkennungsvorganges desselben Kopfes berücksichtigen. Die Datenausgänge 46 und 47 des Ausgangsspeichers 41 sind mit Steuereingängen von zwei in Serie geschalteten elektronischen Schaltern 48 und 49 verbunden. Der erste Schalter 48 verbindet den Mittenpunkt 50 mit einer positiven Spannungsquelle 51 (+ UB) und der zweite Schalter 49 den Mittenpunkt 50 mit — UB. Der Mittenpunkt ist außerdem mit einem Eingang einer Analog/Addierstufe 52 verbunden, deren anderer Eingang mit dem Ausgang eines Rampen- oder Sägezahngenerators 53 verbunden ist. Der Generator 53 wird bei Standbildbetrieb oder Bildsuchlauf eingesetzt. Der Ausgang der Addierstufe 52 ist durch den Steuerausgang 14 mit dem Eingang des Integriergliedes 16 verbunden. Das an den Ausgang der Addierstufe 52 geschaltete Integrierglied 16 spielt die Rolle eines Analogspeichers, welcher die am Mittenpunkt 50 der Schalter 48 und 49 abgegebene Impulsspannung aufrecht erhält.

Der Rampengenerator 53, der sägezahnförmige Ausgangssignale liefert, wird von einer Betriebsartwählstufe 54 ein-und ausgeschaltet. Der Eingang dieser Stufe 54 ist mit dem Eingang 55 der Schaltung 11 verbunden. Ihm wird ein Betriebsartsteuersignal zugeführt. Dieses Signal ist entweder impulsartig (dann enthält die Betriebsartwählerstufe 54 einen bistabilen Kippschalter) oder binär, d. h. durch zwei Pegel (H, L) gegeben.

Während des Standbildbetriebes speist der Rampengenerator 53 über die Addierstufe 52 und Integrierglied 16 den elektro-mechanischen Wandler 15 mit einem sägezahnförmigen Spannungsverlauf durch den eine zeitlich-lineare Bewegung der Kopftrommel 18 entlang des stehenden Magnetbandes bewirkt wird. Diese lineare Kopftrommelbewegung dauert beispielsweise etwas mehr als ein Halbbild, umfaßt also etwa 12-15 Spurdauern. Eine Begrenzung der Verschiebung des Kopfes auf 12 Spuren bedeutet, daß etwas weniger als ein Halbbild wiedergegeben wird. Wesentlich für die Wiedergabe eines Standbildes ist, daß im Signal ein normengerechtes Bildrücklaufsynchronsignal vorhanden ist. Um das zu erreichen wird das Magnetband durch den Capstan-Antrieb soweit transportiert, bis der Magnetkopf K1 auf einer Spur ein Bildrücklaufsynchronsignal erkennt. Erst dann wird das Magnetband arretiert. Durch einen weiteren Ausgang 56 des Rampengenerators 53 wird während des Rücklaufes der Kopftrommel eine Ausblendung des Videosignales bewirkt.

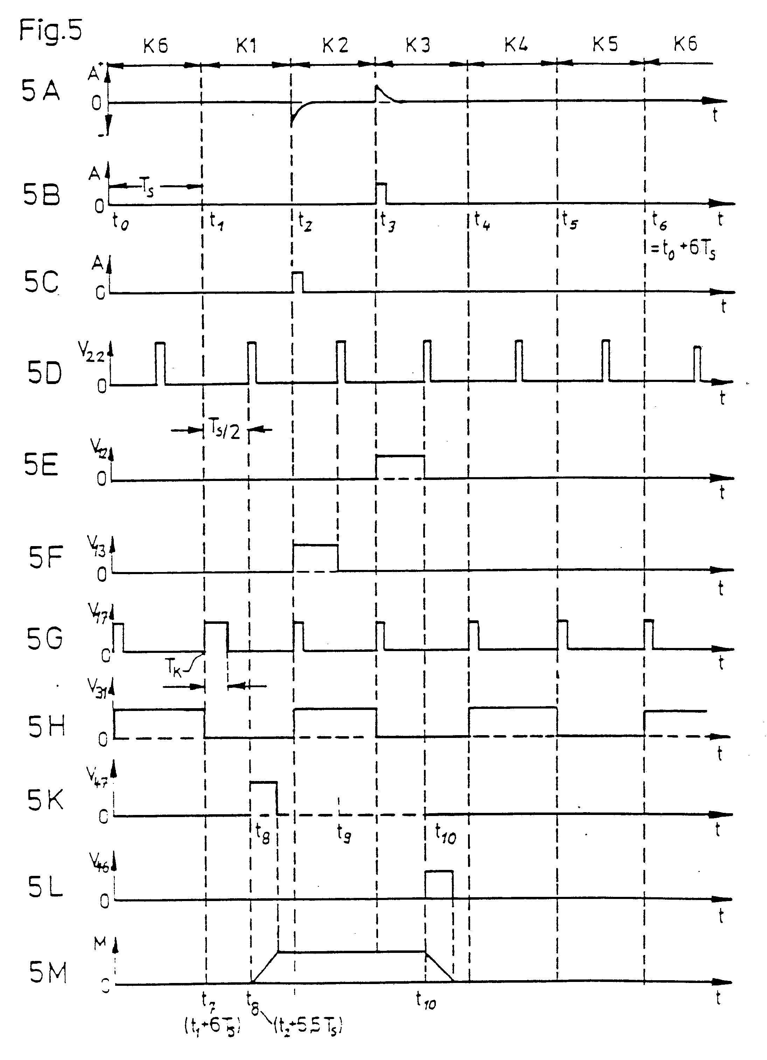

Figur 3 zeigt ein Ablaufdiagram der Einrichtung gemäß Figur 2 im normalen Wiedergabebetrieb.

Die Spurnachsteuerung beginnt mit dem Kopf 1 dessen Bandkontakt durch einen breiten Impuls gekennzeichnet ist. Nachdem Kopf 1 den ersten Horizontal-Synchronimpuls gelesen hat, wird dieser mit der Phase der Oszillatorwelle verglichen. Durch den Vergleich wird ermittelt, ob es einen Phasenfehler gibt, deren Größe oberhalb eines erlaubten Grenzwertes liegt. Ist dies der Fall, gibt eine der mono-stabile Kippschaltungen (8, 9) einen Impuls ab, aus dem die Richtung, d. h. das Vorzeichen des detektierten Phasenfehlers ermittelt wird.

Die Größe des Phasenfehlers spielt dann keine Rolle mehr, weil die Speicherung sowie die Korrektur mengenmäßig erfolgt. In jedem Kopfumdrehzyklus wird bei jedem Kopf nur eine vorbestimmte Menge von Korrektursignalen zu den vorigen addiert und gespeichert. Wenn die Richtung ermittelt worden ist, wird die vorbestimmte Menge als Einheit mit ihrem Vorzeichen gespeichert und die Messung geht zum nächsten Kopf über. Wenn beim ersten Kopf K1 kein Phasenfehler vorhanden ist, wird dieser Zustand abgespeichert. Es folgt die Phasenfehlererkennung für den Kopf 2. Anschließend wird abgefragt, ob alle Köpfe K1 bis K6 den Zyklus durchlaufen haben. Ist die nicht der Fall, wird die Phasenfehlerermittlung mit anschließender Vorzeichenrichtungsermittlung fortgesetzt und die neuen Werte abgespeichert. Dieser Vorgang wiederholt sich solange, bis alle 6 Köpfe K1 bis K6 den Zyklus durchlaufen haben. Wenn dieses der Fall ist, werden im nächsten Zyklus die abgespeicherten Korrekturgrößen mit ihren Vorzeichen an den elektro-mechanischen Wandler 15 abgegeben und ein neuer PhasenfehlerMeßzyklus folgt in der oben beschriebenen Weise, solange, bis die Phasenfehlerdetektoren kein auswertbares Signal mehr abgeben und damit die Triggerschwelle der mono-stabilen Kippstufen 8, 9, unterschreiten. Von diesem Zeitpunkt an bleiben die zuletzt abgespeicherten Korrekturwerte maßgebend für die axiale Verschiebung des Kopfrades. Treten während der Wiedergabe neue Störungen oder Aussetzer auf, wird der beschriebene Vorgang wieder von Anfang an durchlaufen, bis zum gewünschten Endresultat, einer einwandfreien Wiedergabe des aufgezeichneten Videosignales.

Figur 4 zeigt ein vereinfachtes Ablaufdiagramm für Stand-oder Suchlaufbetrieb. Wenn Standbildbetrieb gewählt ist, wird festgestellt ob sich auf der Spur die von Kopf 1 gelesen wird ein Vertikal-Synchron-Impuls befindet. Ist dies nicht der Fall, wird das Magnetband soweit weiter transportiert, bis der Kopf 1 einen Vertikal-Synchron-Signalimpuls gefunden hat. Ist dies der Fall, wird die Capstanachse festgehalten. Danach wird das rampen-oder sägezahnförmige Signal angelegt.

Das Kopfrad liest etwa 16-20 aufeinander folgende Spuren, während es vom elektro-mechanischen Wandler an dem stehenden Band mit gleichmäßiger Geschwindigkeit für die Dauer von etwa 32 ms (20 Spuren pro 1,6 ms) vorbeigeführt wird. Der Rücklauf bis zur gespeicherten Anfangsposition braucht etwa 3-5 Spurdauern von je 1,6 ms, in welcher Zeit das Videosignal ausgetastet werden muß.

Bei Suchlauf muß die Bandgeschwindigkeit ermittelt werden und die Geschwindigkeit V des Vor- oder Nachschubes des Kopfrades dazu addiert werden, d. h., die Steilheit des sägezahnförmigen Signals muß mit dem Wert der Bandgeschwindigkeit modifiziert werden.

Figur 5 gibt eine Übersicht über Zeitdiagramme und Signalformen aus dem Blockschaltbild der Figur 2.

In Figur 5A wird die Signalform der Spannung am Ausgang des ersten Zeitgliedes 3A gezeigt, welche wegen des Azimutversatzes für identische Spurfehler unterschiedliche Richtungen aufweisen kann. Bei Eingriff des zweiten Kopfes K2 wird ein negativer Phasensprung aufgezeigt, während beim Kopf 2 zum Kopf 3 ein positiver Phasensprung erkennbar ist. Z. B. kann die Zeitdauer zwischen dem letzten Zeilensynchronimpuls der von Kopf 1 gelesen wurde und dem ersten Zeilensynchronimpuls des Kopfes 2 etwa 62 $\mu$s sein. Beim Übergang von Kopf 2 zum Kopf 3 ergibt sich ein positiver Phasenfehler, der z. B. einer Zeitdauer von 66 $\mu$s entspricht. In den Figuren 5B und 5C sieht man die Impulse, die die Polaritätstrennungs-und Begrenzerstufen 6 bzw. 7 liefern, welche an die Auslöseeingänge T der mono-stabilen Kippstufen 8 und 9 gelangen. Die Figur 5D zeigt die Rücksetzimpulse, die der Ausgang 22 des Detektorzählers 19 an die Rücksetzeingänge R der Kippstufen 8 und 9 liefert, um sie noch vor dem Umschalten der Köpfe zurückzusetzen. Sie sind im Bezug auf die vom Kopfradimpulsgeber gelieferten Impulse um eine halbe Spurdauer versetzt.

Daher zeigen die Figuren 5E und 5F Impulse am Eingang der Fehlerrichtungserkennungsstufe 33, die Phasenfehler aufzeigen, wobei 5E einen positiven und 5F einen negativen Phasenfehler anzeigt. Die Impulse haben gleiche Amplitude bei gleicher Impulsdauer, die der Hälfte (800 $\mu$s) einer Spurdauer (TS = 25 H = 1.600 $\mu$s) entspricht.

In Figur 5G ist die vom Impulsgeber der Kopftrommel an den Eingang 17 der Schaltung 11 gelieferte Impulsreihe gezeigt, wobei beim Bandkontakt des ersten Kopfes (K1) ein in seiner Breite ($T_K$) codierter Impuls I geliefert wird.

In der Figur 5H ist das vom bi-stabilen Kippschalter 30 abgegebene rechteckförmige Kopfumschaltsteuersignal ($V_{31}$) gezeigt, welches auch der der Fehlerrichtungserkennungsstufe 33 am Eingang 32 zur Korrelierung zugeführt wird.

In den Figuren 5K und 5L sind die Ausgangssignale des Ausgangsspeichers 41 gezeigt, die an den Ausgängen 47 bzw. 46 auftreten und die zur Steuerung der beiden Schalter 48 und 49 dienen. In Bezug zu den am Ausgang A der PLL-Schleife auftretenden Phasenfehlerimpulsen sind diese Signale V 47 bzw. V 48 um 5,5 Spurdauern durch die Speicheranlage 39 verzögert, so daß die Korrektur während der folgenden Kopfumdrehung unternommen wird. Der Korrekturimpuls nach Integrierung in der Integrierschaltung 16 wird in der Figur 5M gezeigt.

## Patentansprüche

1. Spurnachgesteuertes Magnetbandgerät mit quer zur Bandlaufrichtung bewegten, auf einem rotierenden Kopfrad (18) angeordneten Anzahl von wenigstens 2 Magnetköpfen, deren Luftspalte abwechselnd spiegelbildlich zu einer Mittelachse Azimutwinkel aufweisen, wobei die Magnetköpfe am Kopfradumfang derart versetzt angeordnet sind, daß jeweils von einem Kopf die Abtastung von aufgezeichneten Signalen einer Magnetspur erfolgt und wobei abhängig von einem festgestellten Phasenfehler die Stellung der Magnetköpfe zum Band gesteuert wird, dadurch gekennzeichnet, daß aus der Richtung und der Größe von im abgetasteten Signal (HSI) nach einem Spurwechsel auftretenden Phasenfehlern (A) Spursteuergrößen für die einzelnen Magnetköpfe abgeleitet und in einen Speicher (39) eingegeben werden, und daß die Steuergrößen beim nächsten Kopfumlaufentsprechend der Kopfanzahl sequentiell an eine Steuereinrichtung (15, 16) zur Nachstellung des Kopfrades (18) in Achsrichtung und/oder zur Veränderung der Bandgeschwindigkeit ausgegeben werden.

2. Gerät nach Anspruch 1, dadurch gekennzeichnet, daß für die Erkennung von Phasenfehlern eine PLL-Schaltung (2-5) vorgesehen ist, deren Eingang (1) aus dem Wiedergabesignal sich ständig wiederholende Impulsfolgen, wie z. B. Horizontal-Synchronimpulse (HS) zugeführt sind, die Bestandteil einer Erkennungsschaltung (10) ist, der eine Korrekturschaltung (11) nachgeschaltet ist, welche die Speicherung und Ausgabe der Steuergrößen durchführt.

3. Gerät nach Anspruch 1, dadurch gekennzeichnet, daß zur Nachstellung des Kopfrades (18) in Achsrichtung ein elektro-mechanischer Wandler (15) vorgesehen ist.

4. Gerät nach Anspruch 1, dadurch gekennzeichnet, daß die Steuergröße zur Nachstellung des Kopfrades (18) dem elektro-mechanischen Wandler (15) über ein Integrierglied (16) zugeführt wird.

5. Gerät nach Anspruch 1, dadurch gekennzeichnet, daß für Standbildwiedergabe bei stehendem Magnetband dem elektro-mechanischen Wandler (15) zusätzlich eine sägezahnförmige Steuergröße zugeführt wird.

6. Gerät nach Anspruch 1, dadurch gekennzeichnet, daß für Bildsuchlaufbetrieb mit erhöter Bandlaufgeschwindigkeit dem elektro-mechanischen Wandler (15) zusätzlich eine sägezahnförmige Steuergröße zugeführt wird.

7. Gerät nach Anspruch 2, dadurch gekennzeichnet, daß in der PLL-Schaltung (2-5) in Reihe geschaltete Tiefpaßfilter (3, 4) mit einer ersten Zeitkonstante und einer zweiten größeren Zeitkonstante vorgesehen sind, wobei die erste Zeitkonstante so gewählt ist, daß die bei den Kopfumschaltungen auftretenden Phasensprünge des Horizontal-Synchron-Signals an seinem Ausgang (A) in kurze Impulse umgewandelt werden.

8. Gerät nach einem der Ansprüche 1, 2, 3, 4 und 7, dadurch gekennzeichnet, daß der Ausgang (A) des ersten Tiefpaßfilters (3) mit den parallelgeschalteten Eingängen von 2 Polaritätstrennstufen (6, 7) verbunden ist, deren Ausgänge (C, B) je eine monostabile Kippstufe (8, 9) ansteuern, die bei Vorliegen von Phasenfehlern Ausgangsimpulse gleicher Amplitude und gleicher Dauer liefern.

9. Gerät nach Anspruch 8, dadurch gekennzeichnet, daß die Dauer der Ausgangsimpulse der monostabilen Kippstufen (8, 9) kleiner als eine Spurdauer ist, vorzugsweise der Hälfte einer Spurdauer.

10. Gerät nach einem der Ansprüche 1-9, dadurch gekennzeichnet, daß mit dem Kopfrad ein Impulsgeber verbunden ist, der bei jedem Band-Kopfkontakt der einzelnen Magnetköpfe einen Impuls liefert, wobei sich der Impuls für den ersten Kopf von den Impulsen für die anderen Magnetköpfe z. B. in seiner Impulslänge unterscheidet.

11. Gerät nach Anspruch 10, dadurch gekennzeichnet, daß die vom Impulsgeber abgeleiteten Impulse in einem Detektor (19) so ausgewertet werden, daß der Impuls für den Band-Kopfkontakt des ersten Kopfes als Rücksetzimpuls verwendet werden kann.

12. Gerät nach Anspruch 11, dadurch gekennzeichnet, daß die vom Impulsgeber abgegebene Impulsreihe an den Steuereingang eines bi-stabilen Kippschalters (30) angelegt ist, wobei der vom Detektor (19) ausgewertete Impuls für den Band-Kopfkontakt der ersten Magnetkopfes als Rücksetzimpuls dem Kippschalter (30) zugeführt wird, so daß der Ausgang (Q) des Kippschalters (30) Rechteckimpulse liefert, die einerseits am Ausgang (31) der Schaltung (11) als Steuersignal für elektronische Umschaltungen im Gerät und andererseits zur Korrelierung der Polarität der aus den Phasenfehlern abgeleiteten Impulse mit den Azimutwinkeln der einzelnen Magnetköpfe in der Fehlerrichtungserkennungsstufe (33) dient.

13. Gerät nach Anspruch 12, dadurch gekennzeichnet, daß in dem Detektorzähler (19) die vom Impulsgeber gelieferte Impulsreihe in eine um eine halbe Spurperiode verzögerte Impulsreihe umgewandelt wird, wobei diese Impulsreihe den Rücksetzeingängen der monostabilen Kippstufen (8, 9) zugeführt wird.

14. Gerät nach Anspruch 13, dadurch gekennzeichnet, daß dem Detektorzähler (19) ein erster Ringzähler und ein zweiter Ringzähler zugeordnet ist.

15. Gerät nach Anspruch 13 und 14, dadurch gekennzeichnet, daß die vom Impulsgeber gelieferte Impulsreihe den Zähleingang des ersten Ringzählers speist, dessen Parallelausgänge (25) mit den Adresseneingängen (43) eines Eingangsspeichers (40) verbunden sind und daß die um eine halbe Spurdauer verzögerte Impulsreihe den Zähleingang des zweiten Ringzählers speist, dessen Parallelausgänge (29) mit den Adresseneingängen (25) eines Ausgangsspeichers (41) verbunden sind.

16. Gerät nach Anspruch 15, dadurch gekennzeichnet, daß die Ausgänge der Fehlerrichtungserkennungsstufe (33) mit den Dateneingängen des Eingangsspeichers (40) verbunden sind und daß die Datenausgänge des Eingangsspeichers (40) über eine gesteuerte Datentransferstufe (42) mit den Datenausgängen des Ausgangsspeichers (41) verbunden sind.

17. Gerät nach Anspruch 16, dadurch gekennzeichnet, daß der Ausgangsspeicher (41) zwei Ausgänge (46, 47) aufweist, die für Spurfehler entgegengesetzter Richtung auf « high » geschaltet werden, die zwei in Reihe geschaltete Schalter (48, 49) steuern, die zwischen einer Spannungsquelle (+ UB) und (— UB) angeordnet sind, und daß der Mittenpunkt (50) der Schalter durch den Steuerausgang der Spurnachsteuerschaltung (11) mit dem Eingang der Integrierschaltung (16) verbunden ist und Korrektursignale an den Wandler (15) liefert.

18. Gerät nach Ansprüchen 5, 6, und 17, dadurch gekennzeichnet, daß die Signale vom Mittenpunkt der Schalter (50) mit den Sägezahnsignalen in einer Addierstufe (52) kombiniert sind.

## Claims

1. Track post-controlled magnetic tape unit comprising at least 2 magnetic heads moving transversely to the tape direction and disposed on a rotating head wheel (18), the air gaps of the said heads having an azimuthal angle which alternates symmetrically around a mean axis, the said heads being staggered at the head wheel periphery in such a way that the scanning of recorded signals of a magnetic track is performed by one head at a time and the position of the magnetic heads relative to the tape being controlled in dependence on an established phase error, characterised in that track control variables for the individual magnetic heads are derived from the direction and the size of phase errors (A) occurring in the scanned signal (HS1) after a change of track and are inputted into a memory (39), and that the control variables during the next head rotation are according to the number of heads outputted sequentially to a control device (15, 16) for adjustment of the head wheel (18) in the axial direction and/or a change in the tape speed.

2. Unit according to claim 1, characterised in that for the detection of phase errors a phase-locked control loop (2-5) is provided, to the input (1) of which are supplied out of the playback signal continually repeating pulse trains, such as e. g. horizontal synchronous pulses (HS), and which is part of a detection circuit (10) to which is series-connected a correction circuit (11) which performs the storage and output of the control variables.

3. Unit according to claim 1, characterised in that for the adjustment of the head wheel (18) in the axial direction an electro-mechanical converter (15) is provided.

4. Unit according to claim 1, characterised in that the control variable for the adjustment of the head wheel (18) is supplied to the electro-mechanical converter (15) via an integrating member (16).

5. Unit according to claim 1, characterised in that for stationary image playback with a stationary magnetic tape a saw-tooth-shaped control variable is in addition supplied to the electro-mechanical converter (15).

6. Unit according to claim 1, characterised in that for image searching mode at increased tape speed a saw-tooth-shaped control variable is in addition supplied to the electromechanical converter (15).

7. Unit according to claim 2, characterised in that deep-pass filters (3, 4) connected in series in the phase-locked control loop (2-5) are provided with a first time constant and a second, greater time constant, the first time constant being selected so that the phase shifts of the horizontal synchronous signal occurring during the head changeovers at its output (A) are converted into short pulses.

8. Unit according to any one of claims 1, 2, 3, 4 and 7, characterised in that the output (A) of the first low-pass filter (3) is connected to the shunt-connected inputs of 2 polarity separator stages (6, 7), the outputs (C, B) of which each activate a one-shot multivibrator (8, 9) which in the presence of phase errors supply output pulses of equal amplitude and equal duration.

9. Unit according to claim 8, characterised in that the period of the output pulses of the one-shot multivibrators (8, 9) is less than one track period, preferably half of one track period.

10. Unit according to any one of claims 1-9, characterised in that to the head wheel is connected a pulse transmitter which at each tape-head contact of the individual magnetic heads supplies a pulse, the pulse for the first head being distinguished from the pulses for the other magnetic heads, e. g. by its pulse length.

11. Unit according to claim 10, characterised in that the pulses derived from the pulse transmitter are evaluated in a detector (19) in such a way that the pulse for the tape-head contact of the first head can be used as a reset pulse.

12. Unit according to claim 11, characterised in that the pulse train emitted by the pulse transmitter is applied to the control input of a bistable toggle switch (30), the pulse evaluated by the detector (19) for the tape-head contact of the first magnetic head being supplied as a reset pulse to the toggle switch (30) so that the output (Q) of the toggle switch (30) supplies rectangular pulses, which on the one hand serve at the output (31) of the circuit (11) as control signals for electronic change-overs in the unit and on the other for the correlation of the polarity of the pulses derived from the phase errors with the azimuth angles of the individual magnetic heads in the error direction detection stage (33).

13. Unit according to claim 12, characterised in that in the detector counter (19) the pulse train supplied by the pulse transmitter is converted into a pulse train delayed by half a track period, this pulse train being supplied to the reset inputs of the one-shot multivibrators (8, 9).

14. Unit according to claim 13, characterised in that the detector counter (19) is assigned a first ring counter and a second ring counter.

15. Unit according to claims 13 and 14, characterised in that the pulse train supplied by the pulse transmitter feeds the counting input of the first ring counter the parallel outputs (25) of which are connected to the address inputs (43) of an input latch (40), and that the pulse train delayed by half a track period feeds the counting input of the second ring counter the parallel outputs (29) of which are connected to the address inputs (25) of an output latch (41).

16. Unit according to claim 15, characterised in that the outputs of the error direction detection stage (33) are connected to the data inputs of the input latch (40) and that the data outputs of the input latch (40) are connected via a controlled data transfer stage (42) to the data outputs of the output latch (41).

17. Unit according to claim 16, characterised in that the output latch (41) comprises two outputs (46, 47) which are switched to « high » for track errors of opposite direction and which control two series-connected switches (48, 49) which are disposed between a voltage source (+ UB) and (— UB), and that the mid-point (50) of the switches is connected by the control output of the track post-control circuit (11) to the input of the integrating switch (16) and supplies correction signals to the converter (15).

18. Unit according to claims 5, 6 and 17, characterised in that the signals from the mid-point of the switches (50) are combined with the saw-tooth signals in an adding stage (52).

**Revendications**

1. Appareil à bande magnétique à asservissement de piste comprenant au moins deux têtes magnétiques disposées sur une roue porte-têtes mobile en rotation (18) et déplaçables transversalement au sens de défilement de la bande, dont les entrefers comportent alternativement des angles d'azimut symétriques à un axe médian, les têtes magnétiques étant montées décalées à la périphérie de la roue porte-têtes de telle manière qu'une seule tête effectue la lecture des signaux enregistrés sur une piste magnétique, alors que la position des têtes magnétiques par rapport à la bande étant commandée en fonction d'une erreur de phase détectée, caractérisé en ce que des grandeurs d'asservissement de piste sont déduites pour les différentes têtes magnétiques à partir du sens et de l'amplitude des distorsions de phase (A) dans le signal analysé (HSI) apparaissant après un changement de piste et sont envoyées dans une mémoire (39), et que les grandeurs d'asservissement sont délivrées séquentiellement à un système de commande (15, 16) au cours de la révolution suivante de la tête en fonction du nombre de têtes pour régler la roue porte-têtes (18) dans le sens axial et/ou pour modifier la vitesse de la bande.

2. Appareil selon la revendication 1, caractérisé en ce qu'un circuit PLL (2 à 5) est prévu pour détecter des erreurs de phase, dont l'entrée (1) reçoit des trains d'impulsions récurrents à partir du signal de reproduction, tels que des impulsions de synchronisation horizontales (HS), et qui est partie intégrante d'un circuit de détection (10) avec un circuit de correction (11) monté en aval, chargé de mettre en mémoire et de délivrer les grandeurs de commande.

3. Appareil selon la revendication 1, caractérisé en ce qu'un convertisseur électromécanique (15) est prévu pour le réglage de la roue porte-têtes (18) dans le sens axial.

4. Appareil selon la revendication 1, caractérisé en ce que la grandeur de commande pour régler la roue porte-têtes (18) est envoyée au convertisseur électromécanique (15) par un élément intégrateur (16).

5. Appareil selon la revendication 1, caractérisé en ce qu'une grandeur de commande en forme de dents de scie est envoyée en outre au convertisseur électromécanique (15) pour le mode de reproduction arrêt sur image, la bande magnétique étant immobile.

6. Appareil selon la revendication 1, caractérisé en ce qu'une grandeur de commande en forme de dents de scie est envoyée en outre au convertisseur électromécanique (15) pour le mode défilement de recherche d'image avec une vitesse de déplacement de la bande accélérée.

7. Appareil selon la revendication 2, caractérisé en ce que le circuit PLL (2 à 5) comprend des filtres passe-bas (3, 4) montés en série avec une première constante de temps et une deuxième constante de temps plus grande, la première constante de temps étant choisie de telle sorte que les sauts de phase du signal de synchronisation horizontal apparaissant au cours des commutations des têtes, sont convertis à sa sortie (A) en impulsions de courte durée.

8. Appareil selon l'une des revendications 1, 2, 3, 4 et 7, caractérisé en ce que la sortie (A) du premier filtre passe-bas (3) est reliée aux entrées montées en parallèle de 2 étages de séparation de la polarité (6, 7) dont les sorties (C, B) commandent chacune une bascule monostable (8, 9) qui délivre des impulsions de sortie de même amplitude et de même durée en cas d'apparition de distorsions de phase.

9. Appareil selon la revendication 8, caractérisé en ce que la durée des impulsions de sortie des bascules monostables (8, 9) est inférieure à une durée de piste, de préférence, est égale à la moitié d'une durée de piste.

10. Appareil selon l'une des revendications 1 à 9, caractérisé en ce qu'un générateur d'impulsions est reliée à la roue porte-têtes et délivre une impulsion chaque fois qu'une tête magnétique entre en contact avec la bande, l'impulsion pour la première tête se différenciant, par exemple dans sa durée, des impulsions pour les autres têtes magnétiques.

11. Appareil selon la revendication 10, caractérisé en ce que les impulsions délivrées par le générateur d'impulsions sont analysées dans un détecteur (19) de manière que l'impulsion pour l'entrée en contact de la première tête avec la bande peut servir d'impulsion de remise à zéro « reset ».

12. Appareil selon la revendication 11, caractérisé en ce que le train d'impulsions délivré par le générateur d'impulsions est appliqué à l'entrée de commande d'une bascule bistable (30), l'impulsion analysée par le détecteur (19) pour l'entrée en contact de la première tête avec la bande étant envoyée sous forme d'une impulsion « reset » à la bascule (30), de sorte que la sortie (Q) de la bascule (30) délivre des impulsions rectangulaires servant d'une part de signal de commande pour les commutations électroniques dans l'appareil à la sortie (31) du circuit (11) et d'autre part à la corrélation de la polarité des impulsions déduites des distorsions de phase avec les angles d'azimut des différentes têtes magnétiques dans l'étage de détection du sens des erreurs (33).

13. Appareil selon la revendication 12, caractérisé en ce que le train d'impulsions délivré par le générateur d'impulsions, est converti dans le compteur de détection (19) en une série d'impulsions avec un retard égal à une demi durée de piste, cette série d'impulsions étant appliquée aux entrées « reset » des bascules monostables (8, 9).

14. Appareil selon la revendication 13, caractérisé en ce qu'un premier compteur en anneau et un deuxième compteur en anneau sont associés au compteur de détection (19).

15. Appareil selon les revendications 13 et 14, caractérisé en ce que le train d'impulsions délivré par le générateur d'impulsions est appliqué à l'entrée de comptage du premier compteur en anneau dont les sorties parallèles (25) sont reliées aux entrées d'adresses (43) d'une mémoire d'entrée (40), et que le train d'impulsions en retard d'une demi durée de piste est appliqué à l'entrée de comptage du deuxième compteur en anneau dont les sorties parallèles (29) sont reliées aux entrées d'adresses (25) d'une mémoire de sortie (41).

16. Appareil selon la revendication 15, caractérisé en ce que les sorties de l'étage de détection du sens des distorsions (33) sont reliées aux entrées de données de la mémoire d'entrée (40), et que les sorties de données de la mémoire d'entrée (40) sont reliées aux sorties de données de la mémoire de sortie (41) par un étage de transfert des données pilotable (42).

17. Appareil selon la revendication 16, caractérisé en ce que la mémoire de sortie (41) comprend deux sorties (46, 47) qui sont commutées sur « 1 » pour des erreurs de sens opposé et commandent deux interrupteurs montés en série (48, 49) qui sont disposés entre une source de tension (+ UB) et (— UB), et que le point médian (50) des interrupteurs est relié à l'entrée du circuit d'intégration (16) par la sortie de commande du circuit d'asservissement de piste (11) et délivre des signaux correcteurs au convertisseur (15).

18. Appareil selon les revendications 5, 6 et 17, caractérisé en ce que les signaux délivrés au point médian des interrupteurs (50) sont combinés avec les signaux en dents de scie dans un étage additionneur (52).

**EP 0 198 841 B1**

**Fig.1**

V1        V6        S

A
B
C

**Fig.3**

Kopf 1

Phasenfehler
?  →  NEIN

JA

Richtung
Vorzeichen
ermitteln

abspeichern

nächster
Kopf

NEIN ←  alle
Köpfe ?
fertig

JA

Korrektur
ausgeben

**Fig.4**

Standbild
Suchlauf
Betrieb

Kopf 1
liest vertik.
sync?  →  NEIN

JA

Capstanachse
festhalten

Rampe
anlegen

wie vorher

1

EP 0 198 841 B1

Fig.2

Fig.5

EP 0 198 841 B1